(19) **Europäisches Patentamt**
**European Patent Office**
**Office européen des brevets**

(11) **EP 2 772 638 B1**

(12) **FASCICULE DE BREVET EUROPEEN**

(45) Date de publication et mention
de la délivrance du brevet:
**15.11.2017 Bulletin 2017/46**

(51) Int Cl.:
*F02K 9/56* *(2006.01)*    *F02K 9/60* *(2006.01)*
*F15B 1/08* *(2006.01)*    *F16L 55/054* *(2006.01)*

(21) Numéro de dépôt: **14169742.5**

(22) Date de dépôt: **07.05.2012**

(54) **Système d'alimentation de moteur-fusée et procédé de suppression d'effet POGO**

Brennstoffzufuhrvorrichtung eines Raketentriebwerks und Verfahren zur Beseitigung des POGO-Effektes

Rocket engine fuel supply system and method for eliminating the POGO effect

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.05.2011 FR 1154298**

(43) Date de publication de la demande:
**03.09.2014 Bulletin 2014/36**

(62) Numéro(s) de document de la (des) demande(s) initiale(s) en application de l'article 76 CBE:
**12725109.8 / 2 710 248**

(73) Titulaires:
 • **ArianeGroup SAS**
 **75015 Paris (FR)**
 • **Centre National d'Etudes Spatiales (CNES)**
 **75001 Paris (FR)**

(72) Inventeurs:
 • **Kernilis, Alain**
 **78840 Freneuse (FR)**
 • **Lemoine, Nicolas**
 **27200 Vernon (FR)**
 • **Boulet, Ludivine**
 **13100 Aix-en-Provence (FR)**
 • **Le Gonidec, Serge**
 **27200 Vernon (FR)**

(74) Mandataire: **Calvo de Nó, Rodrigo et al**
**Cabinet Beau de Loménie**
**158, rue de l'Université**
**75340 Paris Cedex 07 (FR)**

(56) Documents cités:
**FR-A1- 2 161 794**    **FR-A1- 2 499 641**
**GB-A- 2 264 684**    **JP-A- 3 287 498**
**US-A- 3 286 882**    **US-A- 3 427 808**
**US-A- 5 918 460**

**EP 2 772 638 B1**

**Description**

Arrière-plan de l'invention

La présente invention concerne un système d'alimentation de moteur-fusée en au moins un propergol liquide, comportant au moins un circuit d'alimentation.

Dans le domaine des fusées à propergols liquides, on a donné le nom d'effet POGO à l'entrée en résonance d'un propergol liquide dans le circuit d'alimentation du moteur-fusée avec des oscillations mécaniques de la fusée. Comme la poussée du moteur-fusée varie avec le débit de propergol fourni par le circuit d'alimentation, une telle entrée en résonance peut causer des oscillations rapidement divergentes, et donc donner lieu à des difficultés de guidage, et même à des dommages pouvant aller jusqu'à la perte totale de sa charge utile, voire du véhicule. Le nom d'effet POGO ne provient pas d'un acronyme, mais des « pogo sticks » ou échasses sauteuses, jouets formés par une tige à ressort dont les bonds ont rappelé aux techniciens les oscillations longitudinales violentes des fusées provoquées par cet effet. Depuis le début du développement des fusées à propergols liquides, il s'est donc révélé très important de prendre des mesures de suppression de cet effet POGO. Dans le contexte de la présente description, on entend par « suppression » tant une suppression totale qu'une réduction partielle.

Deux types principaux de systèmes correcteurs d'effet POGO sont connus de la personne du métier, les systèmes passifs et les systèmes actifs. Avec les systèmes passifs, les fréquences de résonance hydraulique sont changées de sorte à ce qu'elles ne puissent pas coïncider avec les fréquences de résonance mécanique de la fusée. Elles peuvent en outre être amorties. Ceci se fait, par exemple, en installant des accumulateurs hydrauliques dans le circuit d'alimentation en propergol. Un tel accumulateur hydraulique est normalement formé par un volume pressurisé comportant du gaz et du liquide en communication avec le circuit d'alimentation. L'accumulateur hydraulique fonctionne comme un système masse-ressort-amortisseur, dans lequel la masse est la masse de liquide dans l'accumulateur, le ressort est formé par le gaz, et l'amortissement provient de la viscosité du liquide entrant et sortant de l'accumulateur par un conduit restreint. La demande de brevet français FR 2 499 641 a divulgué un exemple d'un tel accumulateur hydraulique qui est réglable afin de pouvoir l'adapter à des moteurs-fusées différents. Une variation des paramètres de compressibilité et amortissement de cet accumulateur ne peut toutefois pas être commandée pendant le fonctionnement du moteur fusée. Une autre méthode de correction de l'effet POGO dite passive consiste à changer la fréquence de résonance hydraulique du circuit d'alimentation en y injectant un débit fixe de gaz afin de changer la célérité du son dans le circuit. Par contre, avec les systèmes actifs, on crée une oscillation antagoniste de pression-débit dans le circuit d'alimentation, venant s'opposer aux oscillations mesurées dans le circuit.

Toutefois, tant les systèmes passifs que les systèmes actifs présentent des inconvénients. Les systèmes passifs ne conviennent pas dans le cas de fusées présentant une forte variabilité de leurs fréquences mécaniques pendant leur fonctionnement, puisqu'ils n'amortissent pas les modes en-dehors d'une bande étroite autour des fréquences pour lesquelles ils ont été dimensionnés. En cas d'écart entre les prévisions de dynamique et la dynamique réelle du vol de la fusée, ils ne sont pas en mesure de se corriger. Quant aux systèmes actifs, ils sont susceptibles de n'avoir que localement des effets positifs et peuvent générer ailleurs des effets locaux ou globaux négatifs.

Dans la demande de brevet japonais JP 03-287498 A, un système correcteur d'effet POGO avec un accumulateur hydraulique adaptatif a été proposé. Dans cet accumulateur hydraulique adaptatif, la compressibilité est variable par une variation de pression dans le gaz, mais surtout l'amortissement est variable par un dispositif de restriction variable de flux. Toutefois ceci présente plusieurs inconvénients. Tout d'abord, la variation de pression ne permet de faire varier la compressibilité dans cet accumulateur hydraulique que de manière très restreinte. En outre, bien qu'une variation plus large de l'amortissement puisse être commandée, le dispositif de restriction variable comporte des parties mobiles dans le flux de propergol, ce qui peut poser des problèmes de fiabilité, surtout si le propergol est cryogénique.

Objet et résumé de l'invention

La présente invention vise à remédier à ces inconvénients.

Ce but est atteint grâce au fait que le système d'alimentation selon la présente invention comporte au moins un dispositif de variation d'un volume de gaz dans le circuit d'alimentation, apte à faire varier le volume de gaz dans le circuit pendant le fonctionnement dudit moteur-fusée.

Dans le contexte de la présente divulgation, on entend par « variation » la modification successive d'une grandeur vers une pluralité de valeurs différentes, de manière graduelle et/ou échelonnée. Ainsi, ledit dispositif de variation de volume de gaz permet d'avoir successivement une pluralité de différents volumes de gaz dans le circuit.

Grâce à ces dispositions, il est donc possible de faire varier au moins une fréquence de résonance hydraulique du circuit sur une large plage de fréquences pendant le fonctionnement du moteur-fusée, et de cette manière éviter les fréquences de résonance mécanique d'une structure de support même lorsqu'elles varient aussi pendant le fonctionnement du moteur-fusée. Il est aussi possible d'adapter facilement un même circuit hydraulique à une pluralité de structures différentes avec des fréquences différentes de résonance mécanique. Ledit dispositif de variation du volume de gaz conformément à la revendication 1 comporte au moins un injecteur de gaz à débit variable permettant d'injecter du gaz dans au moins un propergol dans ledit circuit d'alimentation. Ceci présente l'avantage d'offrir un moyen de variation d'au moins une fréquence hydraulique dont la complexité n'est pas sensiblement supérieure à celle des systèmes passifs de l'état de la technique.

Avantageusement, le système d'alimentation comporte en outre une unité de commande dudit dispositif de variation de volume de gaz. Cette unité de commande permet d'associer une commande de variation du volume de gaz à des paramètres tels qu'une fréquence de résonance mécanique estimée, le temps depuis la mise à feu du moteur-fusée, etc.

Encore plus avantageusement, le système d'alimentation comporte en outre au moins un capteur relié à ladite unité de commande, et ladite unité de commande est configurée pour commander une variation de volume de gaz en fonction de signaux captés par ledit capteur. En particulier, ledit au moins un capteur peut comprendre un accéléromètre, ce qui peut permettre une détection d'oscillations mécaniques et/ou une estimation d'au moins une fréquence de résonance mécanique et/ou de son évolution. Ledit au moins un capteur peut aussi comprendre un capteur de pression dudit propergol, ce qui peut permettre une estimation d'au moins une fréquence de résonance hydraulique dudit circuit d'alimentation et/ou de son évolution. Grâce à cette disposition, il est possible de détecter la proximité d'au moins une fréquence de résonance mécanique à l'au moins une fréquence de résonance hydraulique, et de varier cette dernière afin d'éviter l'effet POGO.

Dans au moins un autre mode de réalisation, ladite unité de commande est configurée pour commander une variation du volume de gaz en fonction du temps. Ainsi, si on connaît à l'avance le comportement dans le temps de l'au moins une fréquence de résonance mécanique de la structure couplée au circuit d'alimentation, par exemple par des tests préalables et/ou par des simulations ou calculs, il est possible de programmer la variation de l'au moins une fréquence de résonance hydraulique en fonction du temps afin d'éviter leur coïncidence, et donc l'effet POGO, pendant la durée de fonctionnement du moteur-fusée.

Bien que ces deux possibilités puissent être considérées comme des alternatives, il est aussi possible de les combiner, par exemple avec une consigne de base en fonction du temps et un facteur de correction en fonction de signaux captés par un capteur.

La présente invention concerne aussi un véhicule comportant au moins un moteur-fusée à au moins un propergol liquide avec un système d'alimentation selon l'invention. Dans le contexte de la présente divulgation, « véhicule » peut être entendu au sens le plus large. Ainsi, l'invention pourrait être adaptée à des lanceurs spatiaux mono- ou multi-étages, à des étages individuels de tels lanceurs spatiaux ou à des engins spatiaux tels que des satellites, sondes, capsules ou navettes, mais aussi à des projectiles guidés ou non-guidés, mono- ou multi-étages, ou à des étages individuels de tels projectiles. Dans tous ces cas, l'invention présente l'avantage d'une plus grande fiabilité du véhicule, pour la préservation de sa charge utile jusqu'à sa destination.

La présente invention concerne aussi un procédé de suppression d'effet POGO conformément à la revendication 8, dans lequel un volume de gaz dans un circuit d'alimentation d'un système d'alimentation de moteur-fusée en au moins un propergol liquide est fait varier pendant le fonctionnement dudit moteur-fusée de manière à commander un écart entre au moins une fréquence de résonance hydraulique du circuit d'alimentation et au moins une fréquence de résonance mécanique d'une structure couplée audit circuit d'alimentation..

La variation de la compressibilité de l'ensemble de fluide contenu dans le circuit d'alimentation permet ainsi de faire largement varier l'au moins une fréquence de résonance hydraulique. Il est ainsi possible d'éviter une entrée en résonance des systèmes hydraulique et mécanique provoquant un effet POGO.

Dans au moins un mode de réalisation, ledit volume de gaz varie de manière à maintenir ledit écart au-dessus d'un seuil prédéterminé. On obtient de cette manière une marge de sécurité correspondant à ce seuil.

Toutefois, en particulier quand il est question d'une pluralité de fréquences de résonance hydraulique et/ou d'une pluralité de fréquences de résonance mécanique, il peut être avantageux de faire varier l'au moins une fréquence de résonance hydraulique de manière à maximiser une fonction d'au moins un écart entre une fréquence de résonance hydraulique du circuit d'alimentation et une fréquence de résonance mécanique de la structure. En particulier, si cette fonction est une fonction d'une pluralité d'écarts, correspondant chacun à une paire différente de fréquences de, respectivement, résonance hydraulique et résonance mécanique, cette fonction pourrait être une fonction pondérée avec un coefficient individuel pour chaque paire.

Le volume variable de gaz est fait varier par une variation de débit d'injection de gaz dans au moins un propergol dans ledit circuit d'alimentation. Des bulles de gaz en suspension dans le propergol fournissent ainsi un degré variable de compressibilité à l'ensemble du fluide contenu dans le circuit d'alimentation, ce qui s'exprime notamment par des variations de la célérité du son dans le circuit, ainsi que dans ladite fréquence de résonance hydraulique.

Avantageusement, le volume de gaz peut être fait varier en fonction du temps et/ou d'au moins une valeur d'oscillation mécanique captée sur ladite structure, en particulier une oscillation mécanique sur laquelle est effectuée une analyse spectrale pour déterminer au moins une fréquence de résonance mécanique de ladite structure. Encore plus avantageusement, un algorithme de filtrage, tel que, par exemple, un filtre de Kalman « non-parfumé » ou « UKF » (acronyme de l'anglais « Unscented Kalman Filter ») est appliqué sur l'au moins une oscillation mécanique captée pour déterminer au moins une fréquence de résonance mécanique et/ou prédire son évolution future, ce qui permet de plus facilement éviter la coïncidence de l'au moins une fréquence de résonance mécanique et de l'au moins une fréquence de résonance hydraulique.

La présente invention concerne aussi un support informatique conformément à la revendication 13 comportant des instructions exécutables par ordinateur pour mettre en oeuvre un procédé de suppression d'effet POGO selon l'invention. Par « support informatique » on entend tout support permettant le stockage de données, de manière durable et/ou transitoire, et leur subséquente lecture par un système informatique. Ainsi, on entend par « support informatique », entre autres, les bandes magnétiques, les disques magnétiques et/ou optiques, ou les mémoires électroniques d'état solide, tant volatiles que non-volatiles.

La présente invention peut donc aussi être exprimée sous forme d'un ordinateur programmé pour mettre en oeuvre le procédé de suppression d'effet POGO selon l'invention, ou même d'un logiciel pour mettre en oeuvre, avec un ordinateur, le procédé de suppression d'effet POGO selon l'invention.

Brève description des dessins

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :

- la figure 1 est un schéma, construit au moyen de l'analogie hydraulique-électrique, d'un véhicule à moteur-fusée avec un système d'alimentation en propergol liquide selon un exemple comparatif ;
- les figures 2a et 2b présentent des coupes transversales d'un accumulateur à volume variable installé en dérivation d'un circuit d'alimentation du système de la figure 1 ;
- la figure 3 présente une coupe transversale d'un accumulateur à volume variable suivant un deuxième exemple comparatif ;
- la figure 4 est un schéma, construit au moyen de l'analogie hydraulique-électrique, d'un moteur-fusée avec un circuit d'alimentation en propergol liquide selon un mode de réalisation de l'invention ;
- la figure 5 illustre schématiquement un point d'injection de gaz connecté au circuit de la figure 4 ;
- les figures 6a, 6b, 6c et 6d présentent schématiquement le fonctionnement d'un algorithme de filtrage de Kalman « non-parfumé » ; et
- les figures 7a, 7b, 7c et 7d présentent des graphiques de trois possibles évolutions de la fréquence de résonance hydraulique du circuit d'alimentation en réponse à la variation d'une fréquence de résonance mécanique du véhicule de la figure 1.

Description détaillée de l'invention

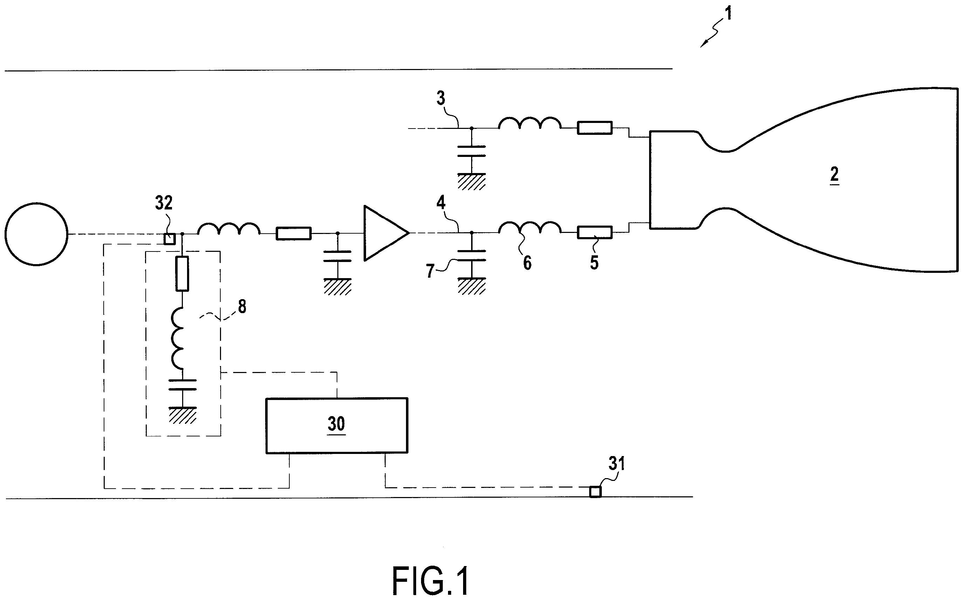

Le véhicule 1 représenté sur la figure 1 comporte une chambre de propulsion 2 intégrant une chambre de combustion et une tuyère convergente-divergente. Le véhicule 1 comporte aussi un circuit d'alimentation 3, 4 pour chacun de deux propergols liquides et chimiquement réactifs alimentant cette chambre de propulsion 2. Le premier circuit d'alimentation 3 est illustré seulement de façon partielle. Chaque circuit d'alimentation 3, 4 rempli de fluide représente un système dynamique qui peut être modélisé comme un circuit électrique comportant des résistances 5, inductances 6 et condensateurs 7 et qui présente au moins une fréquence de résonance.

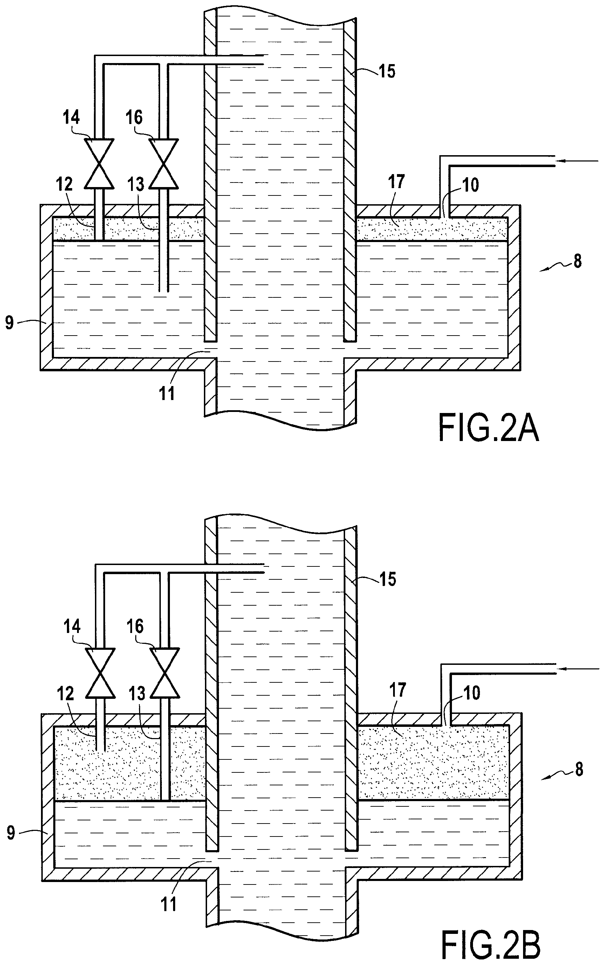

Afin de faire varier l'au moins une fréquence de résonance du deuxième circuit d'alimentation 4, celui-ci comporte, en dérivation du circuit, un accumulateur hydraulique 8 à volume de gaz variable, et donc compressibilité aussi variable. Cet accumulateur 8, illustré sur les figures 2a et 2b, comporte un réservoir 9 avec, d'un côté, un point 10 d'alimentation en gaz à pression, et d'un côté opposé, une connexion 11 à un conduit 15 du deuxième circuit d'alimentation 4. A des différents niveaux entre le point 10 et la connexion 11, des tubes plongeurs 12,13 relient le réservoir 9 avec le conduit 15. Dans chaque tube plongeur 12,13, une vanne 14,16 est interposée entre le réservoir 9 et le conduit 15. L'ouverture et la fermeture des vannes 14,16 permettent ainsi de faire varier le niveau de liquide, et donc le volume de gaz 17, dans le réservoir 9, tel qu'il est illustré sur les figures 2a et 2b. Dans la figure 2a, la vanne 14 du tube plongeur 12 plus court est ouverte, tandis que la vanne 16 du tube plongeur 13 est fermée. La surface libre du liquide est ainsi stabilisée au niveau de l'entrée du tube plongeur 12, et le volume de gaz 17 ainsi que la compressibilité restent ainsi comparativement limités. Dans la figure 2b, la vanne 14 du tube plongeur 12 est par contre fermée, et la vanne 16 du tube plongeur 13 ouverte. La surface libre du liquide est ainsi stabilisée au niveau, plus bas, de l'entrée du tube plongeur 13, et le volume de gaz 17 ainsi que la compressibilité augmentent en conséquence.

En variant la compressibilité effective de l'accumulateur 8, il devient donc possible d'adapter, même pendant le fonctionnement du moteur-fusée du véhicule 1, la fréquence de résonance hydraulique du deuxième circuit d'alimentation 4, de manière à éviter qu'elle coïncide avec une fréquence de résonance mécanique variable d'une structure de soutien du moteur fusée. Bien sûr, pour ce résultat il est nécessaire d'avoir une accélération sensible séparant le liquide, plus lourd, du gaz, plus léger. Cet accumulateur hydraulique 8 à volume de gaz variable ne fonctionnera pas de la même manière en conditions de microgravité.

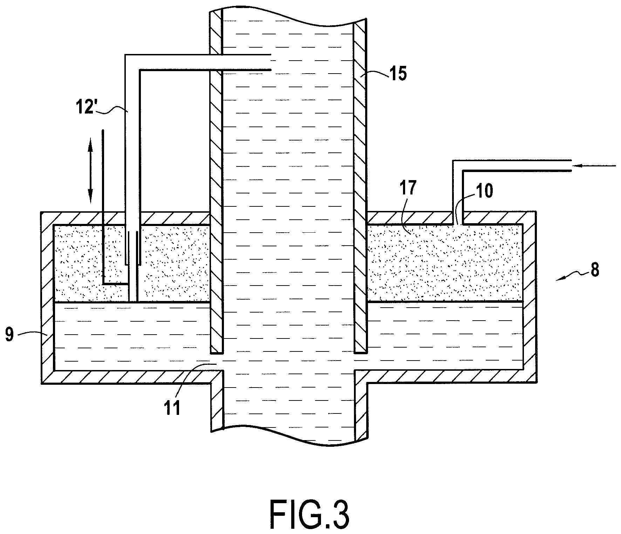

Dans un deuxième exemple comparatif, illustré sur la figure 3, l'accumulateur 8, comporte aussi un réservoir 9 avec, d'un côté, un point 10 d'alimentation en gaz à pression, et d'un côté opposé, une connexion 11 à un conduit 15 du deuxième circuit d'alimentation 4, mais un seul tube plongeur 12' qui est toutefois déplaçable dans le sens de la profondeur du réservoir 9 afin de faire varier le niveau de liquide, et donc le volume de gaz 17, dans le réservoir 9. Ce mode de réalisation permet de faire varier de manière continue le niveau de liquide, et donc le volume de gaz, la compressibilité dans l'accumulateur 8 et la fréquence de résonance hydraulique du deuxième circuit d'alimentation 4.

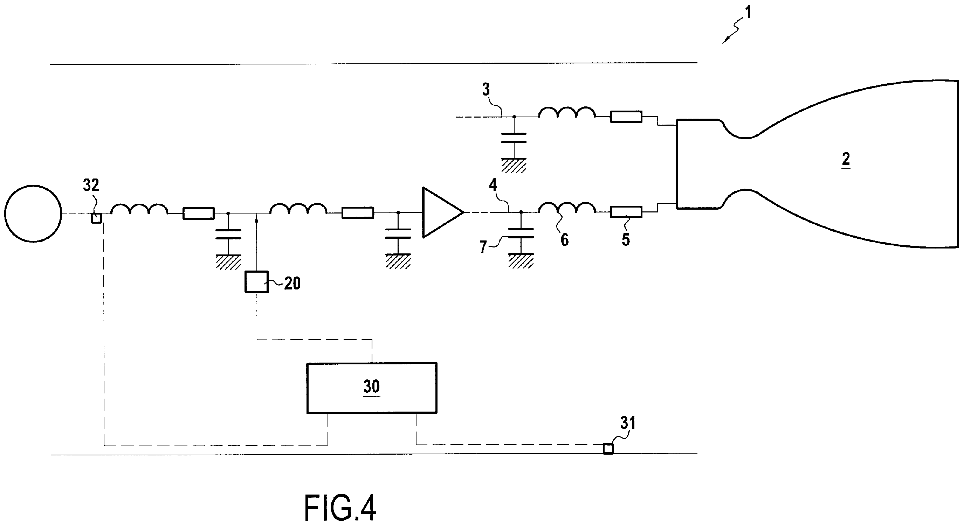

Un mode de réalisation de l'invention est illustré sur la figure 4. Comme dans l'exemple comparatif de la figure 1, dans ce mode de réalisation le véhicule 1 comporte aussi un système d'alimentation avec un circuit d'alimentation 3, 4 pour chacun de deux propergols liquides et chimiquement réactifs alimentant une chambre de propulsion 2.

Toutefois, dans ce mode de réalisation, l'au moins une fréquence de résonance hydraulique du deuxième circuit d'alimentation 4 est faite varier par injection d'un débit gazeux variable, dans le fluide de ce circuit d'alimentation 4, par un dispositif d'injection de gaz 20 connecté à ce deuxième circuit d'alimentation 4. En aval de ce point d'injection 20, la compressibilité de l'ensemble de fluide dans le circuit se trouve modifiée par la compressibilité du volume de gaz injecté. En conséquence, l'au moins une fréquence de résonance hydraulique du circuit d'alimentation 4, ainsi que la célérité du son dans le circuit 4, varient aussi.

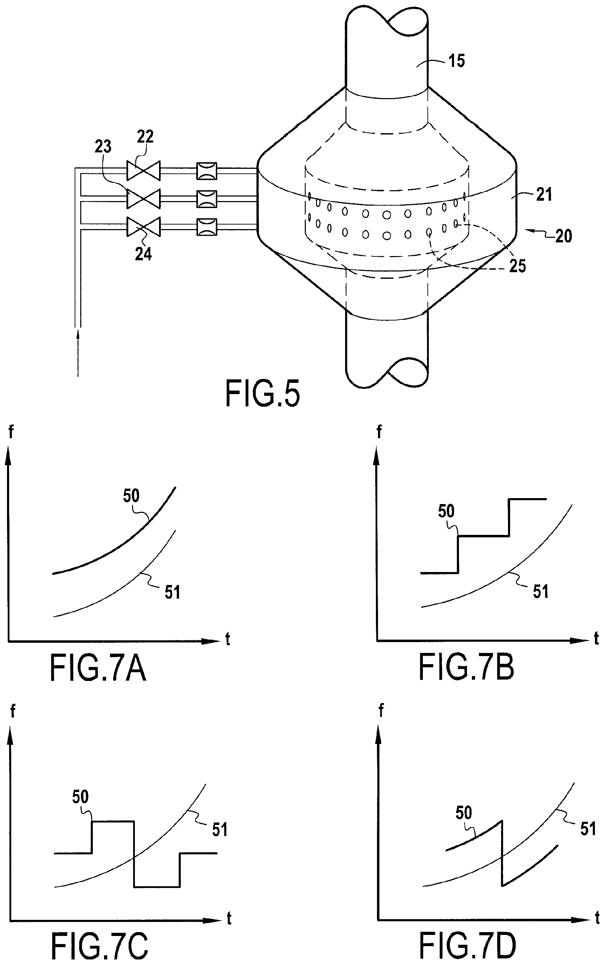

Le dispositif d'injection de gaz 20 est illustré sur la figure 5. Il est installé autour d'un conduit 15 du deuxième circuit d'alimentation 4, et comporte une chambre annulaire 21 autour du conduit 15, connectée à une source de gaz à pression (non illustrée) à travers trois vannes 22, 23 et 24, et communiquant avec le conduit 15 à travers des orifices d'injection 25. Le débit de gaz injecté dans le conduit 15, et donc dans le deuxième circuit d'alimentation, peut donc être varié par l'ouverture et la fermeture de ces vannes 22, 23, 24. Alternativement, ou en combinaison avec cet arrangement, un tel dispositif d'injection de gaz pourrait comporter une vanne à ouverture variable ou un régulateur de débit, permettant ainsi d'obtenir une variation continue du débit volumique de gaz injecté dans le conduit 15, et donc de l'au moins une fréquence de résonance hydraulique.

Tant l'accumulateur hydraulique 8 à volume de gaz variable du premier exemple comparatif que le dispositif d'injection de gaz 20 à débit variable du mode de réalisation de l'invention peuvent être connectés à une unité de commande 30 pour leur pilotage à travers une consigne variable émise par l'unité de commande à l'accumulateur 8 et/ou le dispositif d'injection de gaz 20. Si l'évolution de la fréquence de résonance mécanique est connue à l'avance, par des simulations et/ou des essais préalables, cette consigne peut être préprogrammée comme une simple fonction du temps. Toutefois, il est aussi possible, et même préférable en certains cas, de faire varier cette consigne en réponse à des signaux reçus en temps réel ou quasiment en temps réel. Par exemple, tel qu'il est illustré sur les figures 1 ou 3, le véhicule 1 peut comporter au moins un accéléromètre 31 et un capteur de pression 32 de propergol dans le circuit 4. L'accéléromètre 31 est connecté à l'unité de commande 30 pour lui transmettre des signaux indiquant le comportement mécanique de la structure du véhicule 1, et le capteur de pression 32 y est aussi connecté, pour lui transmettre des signaux indiquant le comportement hydraulique du circuit 4.

Ces signaux sont traités dans l'unité de commande 30 pour en extraire les fréquences de résonance mécanique et hydraulique par analyse spectrale. Des algorithmes de filtrage, comme par exemple l'algorithme de filtrage de Kalman « non-parfumé » décrit dans « The Unscented Kalman Filter for Nonlinear Estimation », Proceedings of Symposium 2000 on Adaptive Systems for Signal Processing, Communication and Control (AS-SPCC), IEEE, Lake Louise, Alberta, Canada, Oct, 2000, peuvent être utilisés, non seulement pour filtrer le bruit des signaux, mais même de manière prédictive pour prévoir l'évolution à court terme des fréquences de résonance et des modes d'oscillation, et les anticiper dans le pilotage de la fréquence de résonance hydraulique. L'unité de commande peut être programmée pour initialiser un tel algorithme de filtrage à proximité d'une fréquence de résonance mécanique prévue, permettant ensuite le suivi de cette fréquence au cours du vol.

Dans un système dynamique tel que le véhicule 1, on peut assumer qu'il existe une séquence de Markov d'états latents $x_t$ évoluant dans le temps suivant une fonction F. Ces états latents sont observés indirectement par les capteurs indiquant des états mesurés $y_t$ à travers une fonction de mesure G. Ainsi, $x_t$ et $y_t$ peuvent être exprimés suivant les formules :

$$x_t = F\left(x_{t-1}\right) + \varepsilon$$

$$y_t = G(x_t) + v$$

Les valeurs $\varepsilon$ et $v$ représentent, respectivement, le bruit inhérent au système et le bruit de mesure, et suivent toutes les deux des distributions gaussiennes.

L'objet d'un algorithme de filtrage est celui d'inférer l'état du système dynamique à travers les valeurs bruitées mesurées par les capteurs. Un filtre de Kalman offre une inférence rapide et précise pour les systèmes linéaires. Il n'est toutefois pas directement applicable aux systèmes non-linéaires, dans lesquels le présent cas d'application pourrait potentiellement être classé. Parmi différentes alternatives pour adapter l'algorithme de filtrage de Kalman aux systèmes non-linéaires, on connaît notamment le filtre de Kalman « non-parfumé » (en anglais, « unscented Kalman filter », ou « UKF »). Cet algorithme propage plusieurs estimations de $x_t$ à travers les fonctions F et G et reconstruit une distribution gaussienne en considérant que les valeurs propagées proviennent d'un système linéaire. Les positions des estimations de $x_t$ sont nommées « points sigma », et sont calculées à partir d'une moyenne et une variance initiales avec un schéma d'approximation appelé transformation non-parfumée.

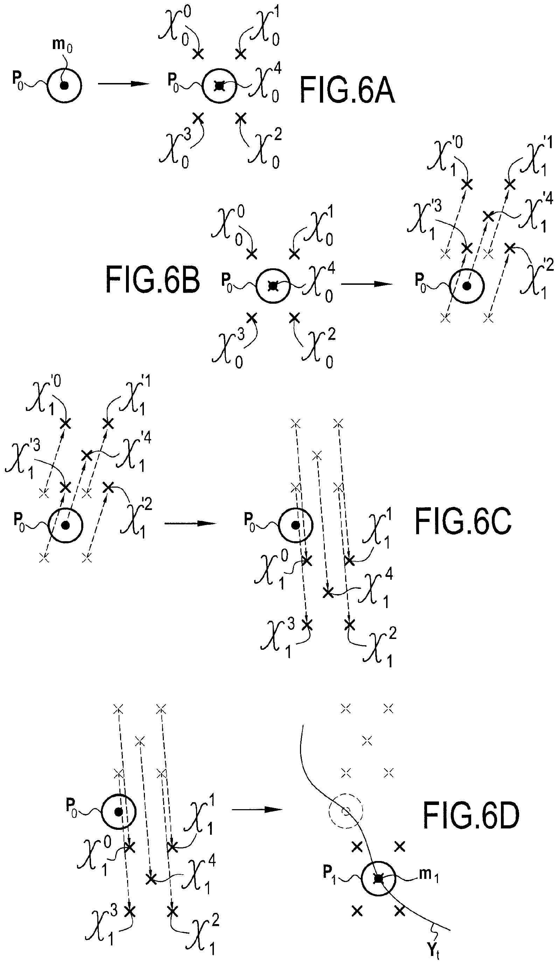

Sur la figure 6a, une première étape est illustrée dans laquelle les points sigma initiaux $X_0^0$, $X_0^1$, $X_0^2$, $X_0^3$, $X_0^4$ sont calculés, par une telle transformation non-parfumée, à partir d'une moyenne $m_0$ et une variance $P_0$ considérant pour l'état latent $x_0$ à partir d'un premier ensemble de mesures $y_0$ au moment initial $t=t_0$. Dans l'étape suivante de prédiction, illustrée sur la figure 6b, des positions estimées $X'_0^0$, $X'_0^1$, $X'_0^2$, $X'_0^3$, $X'_0^4$ des points sigma correspondant à l'échantillonnage suivant ($t=t_1$) sont prédites en appliquant, aux points sigma initiaux $X_0^0$, $X_0^1$, $X_0^2$, $X_0^3$, $X_0^4$, l'étape de prédiction de l'algorithme de filtrage de Kalman. Dans l'étape suivante de mise à jour, illustrée sur la figure 6c, les points sigma $X_1^0$, $X_1^1$, $X_1^2$, $X_1^3$, $X_1^4$ effectifs sont calculés à partir de l'échantillonnage précédent ($t=t1$). Les différences entre les positions $X'_0^0$, $X'_0^1$, $X'_0^2$, $X'_0^3$, $X'_0^4$ prédites sur base des points sigma initiaux $X_0^0$, $X_0^1$, $X_0^2$, $X_0^3$, $X_0^4$ et celles $X_1^0$, $X_1^1$, $X_1^2$, $X_1^3$, $X_1^4$ effectivement calculées sur base du nouvel échantillonnage permettent d'obtenir de l'information sur la fonction $f$ d'évolution de l'état latent $x_t$ dans le temps. Dans l'étape suivante, illustrée sur la figure 6d, une nouvelle moyenne $m_1$ et une nouvelle variance $P_1$ sont calculées sur la base des nouveaux points sigma $X_1^0$, $X_1^1$, $X_1^2$, $X_1^3$, $X_1^4$. Cet algorithme est récursif, et chaque étape à partir de celle de prédiction va être répétée à chaque nouvel échantillonnage.

Dans l'unité de commande, les fréquences de résonance mécanique et hydraulique sont comparées, et, par exemple, si leur écart approche ou arrive en dessous d'un certain seuil, l'unité de commande 30 varie la consigne transmise à l'accumulateur 8 et/ou au dispositif d'injection de gaz 20.

Les figures 7a, 7b, 7c et 7d montrent quatre exemples de pilotage d'une fréquence de résonance hydraulique 50 en réponse à une fréquence de résonance mécanique 51 croissante. Dans le premier exemple, illustré sur la figure 7a, la fréquence de résonance hydraulique 50 peut être variée de manière continue pour maintenir un écart constant avec la fréquence de résonance mécanique 51. Dans le deuxième exemple, illustré sur la figure 7b, la fréquence de résonance hydraulique 50 est variée de manière étagée pour que l'écart entre les deux fréquences 50 et 51 ne soit pas inférieur à un seuil donné. Il se peut aussi que la fréquence de résonance hydraulique 50 ne puisse pas être variée sur une plage aussi large que la fréquence de résonance mécanique 51. Dans ce cas, il est aussi possible, comme illustré sur la figure 7c, de piloter un changement quasi-instantané d'une fréquence de résonance hydraulique 50 sensiblement supérieure à la fréquence de résonance mécanique 51 à une fréquence de résonance hydraulique 50 sensiblement inférieure à la fréquence de résonance mécanique 51 (ou vice versa). La coïncidence uniquement momentanée des fréquences de résonance ne permettra pas le déclenchement d'une résonance dangereuse. Finalement, il est aussi possible de combiner des variations graduelles de la fréquence de résonance hydraulique 50 avec des changements abrupts, comme illustré sur la Fig. 7d.

La structure de soutien du moteur fusée peut aussi présenter une pluralité de fréquences variables de résonance mécanique, tout comme chaque circuit d'alimentation peut présenter une pluralité de fréquences de résonance hydraulique. Dans ces cas, un pilotage du volume de gaz dans le circuit d'alimentation simplement destiné à maintenir l'écart entre une fréquence de résonance hydraulique et une fréquence de résonance mécanique au-dessus d'un seuil prédéterminé pourrait être inadéquat. Dans au moins une alternative, le volume de gaz peut être piloté de manière à maximiser une fonction des écarts entre plusieurs paires de, respectivement, une fréquence de résonance hydraulique du circuit d'alimentation et une fréquence de résonance mécanique de la structure.

Ainsi, dans un premier exemple dans lequel le circuit d'alimentation présente deux fréquences variables de résonance hydraulique, dont une fréquence de résonance hydraulique supérieure $f_{h,sup}$ et une fréquence de résonance hydraulique inférieure $f_{h,inf}$, et la structure présente une seule fréquence variable $f_s$ de résonance mécanique, la fonction à maximiser $R_{opt}$ peut suivre l'équation :

$$R_{opt} = min \left( \left| \frac{f_{h,sup} - f_s}{f_s} \right|, \left| \frac{f_{h,inf} - f_s}{f_s} \right| \right)$$

Cette fonction pourrait être une fonction pondérée avec un ou plusieurs coefficients de pondération. Ainsi, dans un deuxième exemple dans lequel le circuit d'alimentation présente deux fréquences variables de résonance hydraulique, dont une fréquence de résonance hydraulique supérieure $f_{h,sup}$ et une fréquence de résonance hydraulique inférieure $f_{h,inf}$, et la structure présente deux modes de résonance mécanique, avec une fréquence de résonance mécanique du premier mode $f_{s,1}$ et une fréquence de résonance mécanique du deuxième mode $f_{s,2}$, la fonction à maximiser $R_{opt}$ peut suivre les équations :

$$R_{opt,1} = min \left( \left| \frac{f_{h,sup} - f_{s,1}}{f_{s,1}} \right|, \left| \frac{f_{h,inf} - f_{s,1}}{F_{s,1}} \right| \right)$$

$$R_{opt,2} = min \left( \left| \frac{f_{h,sup} - f_{s,2}}{f_{s,2}} \right|, \left| \frac{f_{h,inf} - f_{s,2}}{f_{s,2}} \right| \right)$$

$$R_{opt} = min \left( R_{opt,1}, x_{1,2} R_{opt,2} \right)$$

dans lesquelles $x_{1,2}$ représente un coefficient de pondération du deuxième mode de résonance mécanique de la structure.

Quoique la présente invention ait été décrite en se référant à un exemple de réalisation spécifique, il est évident que d'autres modifications et changements peuvent être effectués sur ces exemples sans sortir de la portée générale de l'invention telle que définie par les revendications. Par conséquent, la description et les dessins doivent être considérés dans un sens illustratif plutôt que restrictif.

**Revendications**

1. Système d'alimentation de moteur-fusée en au moins un propergol liquide, comportant au moins un circuit d'alimentation (4) et au moins un dispositif de variation d'un volume de gaz dans le circuit (4), apte à faire varier le volume de gaz dans le circuit pendant le fonctionnement dudit moteur-fusée **caractérisé en ce que** le dispositif de variation d'un volume de gaz comporte au moins un injecteur (20) de gaz à débit variable permettant d'injecter du gaz dans au moins un propergol dans ledit circuit d'alimentation.

2. Système d'alimentation selon la revendication 1, comportant en outre une unité de commande (30) dudit dispositif de variation de volume de gaz.

3. Système d'alimentation selon la revendication 2, comportant en outre au moins un capteur relié à ladite unité de commande (30), et dans lequel ladite unité de commande (30) est configurée pour commander une variation du volume de gaz en fonction de signaux captés par ledit au moins un capteur.

4. Système d'alimentation selon la revendication 3, dans lequel ledit au moins un capteur comprend un accéléromètre (31).

5. Système d'alimentation selon l'une quelconque des revendications 3 ou 4, dans lequel ledit au moins un capteur comprend un capteur (32) de pression dudit propergol.

6. Système d'alimentation (4) selon l'une quelconque des revendications 2 à 5, dans lequel ladite unité de commande (30) est configurée pour commander une variation du volume de gaz en fonction du temps.

7. Véhicule (1) comportant au moins un moteur-fusée à au moins un propergol liquide avec un système d'alimentation (4) selon l'une quelconque des revendications 1 à 6.

8. Procédé de suppression d'effet POGO, dans lequel un volume de gaz dans un circuit d'alimentation (4) d'un système d'alimentation de moteur-fusée en au moins un propergol liquide varie pendant le fonctionnement dudit moteur-fusée de manière à commander un écart entre au moins une fréquence de résonance hydraulique (50) du circuit d'alimentation (4) et au moins une fréquence de résonance mécanique (51) d'une structure couplée audit circuit d'alimentation, **caractérisé en ce que** lequel ledit volume de gaz est fait varier par une variation de débit d'injection de gaz dans au moins un propergol dans ledit circuit d'alimentation (4).

9. Procédé de suppression d'effet POGO selon la revendication 8, dans lequel ledit volume de gaz varie de manière à maintenir ledit écart au-dessus d'un seuil prédéterminé.

10. Procédé de suppression d'effet POGO selon l'une quelconque des revendications 8 ou 9, dans lequel ledit volume de gaz varie de manière à maximiser une fonction d'au moins un écart entre une fréquence de résonance hydraulique (50) du circuit d'alimentation (4) et une fréquence de résonance mécanique (51) de la structure.

11. Procédé de suppression d'effet POGO selon l'une quelconque des revendications 8 à 10, dans lequel ledit volume de gaz est fait varier en fonction d'au moins une valeur d'oscillation mécanique captée sur ladite structure.

12. Procédé de suppression d'effet POGO selon la revendication 12, dans lequel un algorithme de filtrage, tel que, par exemple, un filtre de Kalman « non-parfumé », est appliqué sur l'au moins une oscillation mécanique captée pour déterminer au moins une fréquence de résonance mécanique (51) et/ou prédire son évolution future.

13. Support informatique comportant des instructions exécutables par ordinateur pour mettre en oeuvre un procédé de suppression d'effet POGO selon l'une quelconque des revendications 8 à 12 lorsque lesdites instructions sont exécutées par un ordinateur.

**Patentansprüche**

1. System zur Versorgung eines Raketentriebwerks mit mindestens einem flüssigen Treibstoff, umfassend mindestens einen Versorgungskreislauf (4) und mindestens eine Vorrichtung zur Variation eines Gasvolumens in dem Kreislauf (4), die geeignet ist, das Gasvolumen in dem Kreislauf während des Betriebs des Raketentriebwerks zu variieren, **dadurch gekennzeichnet, dass** die Vorrichtung zur Variation eines Gasvolumens mindestens einen Gasinjektor (20) mit variabler Durchflussmenge umfasst, der es ermöglicht, Gas in mindestens einen Treibstoff in dem Versorgungskreislauf einzuspritzen.

2. Versorgungssystem gemäß Anspruch 1, ferner umfassend eine Steuereinheit (30) der Vorrichtung zur Variation eines Gasvolumens.

3. Versorgungssystem gemäß Anspruch 2, ferner umfassend mindestens einen Sensor, der mit der Steuereinheit (30) verbunden ist, und bei dem die Steuereinheit (30) dazu vorgesehen ist, eine Variation des Gasvolumens in Abhängigkeit von durch den Sensor erfassten Signalen zu steuern.

4. Versorgungssystem gemäß Anspruch 3, bei dem der mindestens eine Sensor einen Beschleunigungsmesser (31) umfasst.

5. Versorgungssystem gemäß einem der Ansprüche 3 oder 4, bei dem der mindestens eine Sensor einen Drucksensor (32) für den Treibstoff umfasst.

6. Versorgungssystem (4) gemäß einem der Ansprüche 2 bis 5, bei dem die Steuereinheit (30) dazu vorgesehen ist, eine Variation des Gasvolumens in Abhängigkeit von der Zeit zu steuern.

7. Fahrzeug (1), umfassend mindestens ein Raketentriebwerk mit mindestens einem flüssigen Triebstoff mit einem Versorgungssystem (4) gemäß einem der Ansprüche 1 bis 6.

8. Verfahren zur Unterdrückung eines POGO-Effekts, bei dem ein Gasvolumen in einem Versorgungskreislauf (4) eines Systems zur Versorgung eines Raketentriebwerks mit mindestens einem flüssigen Treibstoff während des Betriebs des Raketentriebwerks variiert, um eine Abweichung zwischen mindestens einer hydraulischen Resonanzfrequenz (50) des Versorgungskreislaufs (4) und mindestens einer mechanischen Resonanzfrequenz (51) einer an den Versorgungskreislauf gekoppelten Struktur zu steuern, **dadurch gekennzeichnet, dass** das Gasvolumen durch eine Variation der Gaseinspritzmenge in mindestens einen Treibstoff in dem Versorgungskreislauf (4) variiert wird.

9. Verfahren zur Unterdrückung eines POGO-Effekts gemäß Anspruch 8, bei dem das Gasvolumen derart variiert, dass die Abweichung über einer vorbestimmten Schwelle gehalten wird.

10. Verfahren zur Unterdrückung eines POGO-Effekts gemäß einem der Ansprüche 8 oder 9, bei dem das Gasvolumen derart variiert, dass eine Funktion mindestens einer Abweichung zwischen einer hydraulischen Resonanzfrequenz (50) des Versorgungskreislaufs (4) und einer mechanischen Resonanzfrequenz (51) der Struktur maximiert wird.

11. Verfahren zur Unterdrückung eines POGO-Effekts gemäß einem der Ansprüche 8 bis 10, bei dem das variable Gasvolumen in Abhängigkeit von mindestens einem mechanischen Schwingungswert, der an der Struktur erfasst wird, variiert wird.

12. Verfahren zur Unterdrückung eines POGO-Effekts gemäß Anspruch 11, bei dem ein Filteralgorithmus, wie beispielsweise ein "nicht parfümierter" Kalman-Filter, an mindestens einer mechanischen Schwingung angewandt wird, die erfasst wird, um mindestens eine mechanische Resonanzfrequenz (51) zu bestimmen und/oder ihre zukünftige Entwicklung vorherzusagen.

13. Informatikträger, umfassend von einem Computer ausführbare Befehle, um ein Verfahren zur Unterdrückung eines POGO-Effekts gemäß einem der Ansprüche 8 bis 12 einzusetzen, wenn die Befehle von einem Computer ausgeführt werden.

**Claims**

1. A feed system for feeding a rocket engine with at least one liquid propellant, the system comprising at least one feed circuit (4) and at least one device for varying a volume of gas in the circuit (4), which device is suitable for causing the volume of gas in the circuit to vary while said rocket engine is in operation **characterized in that** the device for varying a volume of gas comprises at least one variable flowrate gas injector (10) suitable for injecting gas into at least one propellant in said feed circuit.

2. A feed system according to claim 1, further comprising a control unit (30) for controlling said device for varying gas volume.

3. A feed system according to claim 2, further comprising at least one sensor connected to said control unit (30), and wherein said control unit (30) is configured to control variation in the gas volume as a function of signals sensed by said at least one sensor.

4. A feed system according to claim 3, wherein said at least one sensor comprises an accelerometer (31).

5. A feed system according to claim 3 or claim 4, wherein said at least one sensor comprises a sensor (32) for sensing the pressure of said propellant.

6. A feed system (4) according to any one of claims 2 to 5, wherein said control unit (30) is configured to control variation of the gas volume as a function of time.

7. A vehicle (1) including at least one rocket engine with at least one liquid propellant having a feed system (4) according to any one of claims 1 to 6.

8. A method of suppressing the POGO effect, wherein a volume of gas in a feed circuit (4) of a system for feeding a rocket engine with at least one liquid propellant varies while said rocket engine is in operation so as to control a difference between at least one hydraulic resonant frequency (50) of the feed circuit (4) and at least one mechanical resonant frequency (51) of a structure coupled to said feed circuit, **characterized in that** said gas volume is varied by a variation of a flowrate of gas injection into at least one propellant in said feed circuit (4).

9. A method of suppressing the POGO effect according to claim 8, wherein said gas volume varies so as to keep said difference above a predetermined threshold.

**10.** A method of suppressing the POGO effect according to claim 8 or claim 9, wherein said gas volume varies so as to maximize a function of at least one difference between a hydraulic resonant frequency (50) of the feed circuit (4) and a mechanical resonant frequency (51) of the structure

**11.** A method of suppressing the POGO effect according to any one of claims 8 to 10, wherein said gas volume is caused to vary as a function of at least one mechanical oscillation value sensed on said structure.

**12.** A method of suppressing the POGO effect according to claim 11, wherein a filter algorithm, e.g. such as an "unscented" Kalman filter, is applied to at least one sensed mechanical oscillation in order to determine at least one mechanical resonant frequency (51) and/or to predict its future variation.

**13.** A computer data support including computer executable instructions for performing a method of suppressing the POGO effect according to any one of claims 8 to 12 when said instructions are executed by a computer.

FIG.1

FIG.2A

FIG.2B

FIG.3

FIG.4

EP 2 772 638 B1

FIG.5

FIG.7A

FIG.7B

FIG.7C

FIG.7D

FIG.6A

FIG.6B

FIG.6C

FIG.6D

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2499641

- JP 3287498 A

**Littérature non-brevet citée dans la description**

- The Unscented Kalman Filter for Nonlinear Estimation. Proceedings of Symposium 2000 on Adaptive Systems for Signal Processing, Communication and Control (AS-SPCC). IEEE, Octobre 2000